Europäisches Patentamt

European Patent Office

Office européen des brevets

(11) Veröffentlichungsnummer : **0 391 143 B1**

(12) **EUROPÄISCHE PATENTSCHRIFT**

(45) Veröffentlichungstag der Patentschrift :
**12.10.94 Patentblatt 94/41**

(51) Int. Cl.⁵ : **H02H 3/00**, H02H 7/08

(21) Anmeldenummer : **90105370.2**

(22) Anmeldetag : **21.03.90**

(54) **Überwachungsgerät mit Schaltvorrichtung.**

(30) Priorität : **03.04.89 DE 3910718**

(43) Veröffentlichungstag der Anmeldung :
**10.10.90 Patentblatt 90/41**

(45) Bekanntmachung des Hinweises auf die
Patenterteilung :
**12.10.94 Patentblatt 94/41**

(84) Benannte Vertragsstaaten :
**AT CH DE FR GB IT LI SE**

(56) Entgegenhaltungen :
**DE-A- 3 311 240**
**US-A- 4 434 390**
**33rd Annual Petroleum and Chemical Industry**
**Conference, 8-10 September 1986, Philadelfia,**
**S. 183-188; J. Brandolino : "Protection and**
**Management of A.C.Motors using Microcom-**
**puter Technology."**

(73) Patentinhaber : **SIEMENS**
**AKTIENGESELLSCHAFT**
**Wittelsbacherplatz 2**
**D-80333 München (DE)**

(72) Erfinder : **Zerbian, Erich, Dipl.-Ing. (FH)**
**Bachstrasse 5**
**D-8451 Fensterbach (DE)**
Erfinder : **Fröhlich, Paul, Dipl.-Ing.**
**Theodor-Heuss-Strasse 1**
**D-8458 Sulzbach-Rosenberg (DE)**
Erfinder : **Neumann, Siegfried, Dipl.-Ing.(FH)**
**Lindenstrasse 6**
**D-8457 Kümmersbruck (DE)**
Erfinder : **Freitag, Richard, Dipl.-Ing, (FH)**
**Mühlacker 8**
**D-8451 Hahnbach (DE)**
Erfinder : **Jähne, Hans-Joachim, Dr.**
**Triftweg 12**
**D-8450 Amberg (DE)**

## Beschreibung

Die Erfindung bezieht sich auf ein Überwachungsgerät mit einer abhängig von einer Stromerfassungseinrichtung wirkenden Schaltvorrichtung zum Öffnen bzw. Schließen von Stromkreisen bei Überlast, mit einem Prozessor und Sollwertspeichern, mit denen Istwerte vergleichbar und auswertbar sind, sowie Auslösezustandsanzeigemitteln.

Bei einem bekannten Überwachungsgerät der oben genannten Art (DE-OS 33 11 240) sind zwar Mittel vorhanden, die bei der Bildung der Schwellwerte ein thermisches Abbild berücksichtigen bzw. durch die die Schwellwertauswertung durch einen setzbaren Zählerstand abhängig von der Auslöseklasse beeinflußt wird. Es ist auch ein Wahlschalter vorhanden, durch den eine Mehrzahl von Schwellwerten berücksichtigt werden kann, sowie eine den Schaltzustand anzeigende Lumineszenzdiode.

Ferner wird in dem Aufsatz "Protection and Management of AC Motors using Microcomputer Technology von Joe Brandolino (Paper No. PCIC-86-26,Copyright Material, IEEE, 1986) ein Überwachungsgerät für Motoren mit einer abhängig von einer Stromerfassungseinrichtung wirkenden Schaltvorrichtung zum Öffnen und Schließen von Stromkreisen bei Überlast mit einem Prozessor und Sollwertspeichern, mit denen Istwerte vergleichbar und auswertbar sind, sowie mit Auslösezustandsanzeigemitteln beschrieben. Dieses Überwachungsgerät bietet eine Status-Überwachung für Motorströme, Motortemperatur und ähnliche Größen. Über eine LCD-Anzeige wird dem Benutzer die momentane Motorbelastung im Hinblick auf vorgebbare Grenzwerte angezeigt. Zusätzliche Fehlerursachen, die nicht an dem Motorabzweig abgreifbar sind, wie beispielsweise Soft- oder Hardwarefehler in der Ansteuerung oder Busunterbrechungen in der Datenübertragung werden jedoch nicht erfaßt. Darüber hinaus ist es nachteilig, daß der Benutzer nicht unmittelbar an der Anzeigeeinheit selbst Eingaben vornehmen kann, mit denen er entweder zusätzliche Informationen abrufen, oder in Wirkverbindung mit dem zu überwachenden Motor treten kann.

Der vorliegenden Erfindung liegt die Aufgabe zugrunde, ein komfortables Überwachungsgerät zu schaffen, das bei einem einfachen Aufbau, zusätzlich zu den Parametern eines zu überwachenden Motors, Steuerparameter und den Zustand der angeschlossenen Schaltung wirksam überwacht und anzeigt. Darüber hinaus soll ein Benutzer unmittelbar an der Anzeigeeinrichtung die Anzeige und/oder Stellgrößen der Motorsteuerung verändern können. Ferner sollen Schäden durch Fehlinstallationen vermieden werden.

Dies wird auf einfache Weise durch eine Weiterbildung des Überwachungsgerätes gemäß dem Kennzeichen des Anspruchs 1 erreicht. Hierdurch stehen aktuelle Daten, beispielsweise für einen Motorabzweig, jederzeit zur Verfügung, können in einer Anzeige nacheinander kontrolliert werden, ohne daß zusätzlich Sensorenfühler über zusätzliche Verbindungskabel oder zusätzliche Eingabebaugruppen notwendig wären. Um das Überwachungsgerät den einzelnen Erfordernissen auf einfache Weise anpassen zu können, ist es vorteilhaft, wenn im Überwachungsgerät Eingabetasten zur Eingabe gewünschter, im Laufdisplay anzeigbarer Parameter vorhanden sind. Die Daten können hierbei im Speicher abgelegt werden, wonach die Inbetriebnahme des Überwachungsgerätes möglich ist. Um Schäden bei Fehlinstallationen zu vermeiden, ist in das Überwachungsgerät eine Einrichtung zum Sperren der Einschaltung der Schaltvorrichtung bei nicht zulässiger Zuordnung von Stromwandlerbelastbarkeit, Schützgröße, Nennstrom und Auslöseklasse integriert. Da für das Schutzgerät in bezug auf explosionsgeschützte Motoren der Auslösestrom gegenüber normalen Motoren unterschiedlich ist, ist es von Vorteil, wenn die Sperreinrichtung zusätzlich von Vorgaben für den Explosionsschutz abhängig ist. Sofern der Überstrom unzulässig hohe Werte, die beispielsweise im Kurzschlußstrombereich liegen können, annimmt, würde beim Abschalten das für Normalstrom dimensionierte Schütz gegebenenfalls Schaden leiden. Hierzu ist es vorteilhaft, wenn in das Überwachungsgerät eine Einrichtung zum Sperren und Öffnen des Stromkreises durch ein Schütz und zur Freigabe des Schaltvorganges an den übergeordneten Leistungsschalter integriert ist. Um mit einem Gerät beliebige, standardmäßige Steuerfunktionen ausführen zu können, ist es von Vorteil, wenn im Überwachungsgerät eine Einrichtung zur Zuordnung unterschiedlicher Ausgangsfunktionen zur jeweiligen Sollvorgabe vorhanden ist. Hierbei wird die jeweils gewünschte Ausgangsfunktion als Sollwert dem Prozessor vorgegeben. Derartige Ausgangsfunktionen sind Direktstarten, Wendestarten, Stern-Dreieckstarten, Dahlanderstarten, Polumschalten, Ventilbetätigen, Schieberbetätigen, Sanftstarten und Betätigen verklinkter Schaltgeräte. Um eine aktuelle Information über den Zustand eines Niederspannungs-Schaltgerätes an einem andederen Ort erhalten zu können, mußte bisher für jedes einzelne Signal eine Leitung von dem einen Ort zum anderen gezogen werden, was eine hohe Fehlerwahrscheinlichkeit mit sich brachte. Um dies zu vermeiden ist es u.a. vorteilhaft, wenn in das Überwachungsgerät eine oder mehrere seriell arbeitende Schnittstellen zur wechseLseitigen Datenübertragung zwischen zwei getrennten Einheiten integriert sind. Um ,eine Parametrierung auch von außen her, beispielsweise über einen angeschlossenen PC, durchführen zu können, ist es vorteilhaft, daß die Einheiten örtlich getrennt sind. Um eine schnelle Abarbeitung der anstehenden Probleme zu erreichen, kann es vorteilhaft sein, wenn die Einheiten getrennte Prozessoren sind. Um sicherzustellen, daß bei übergeordnetem Prozessor die von ihm vorgegebene Parametrierung am Überwachungsgerät selbst nicht ohne Wissen des übergeordneten Prozessors geändert wird, ist es vorteilhaft, wenn die Freigabe der Eingabetastenfunktion abhängig vom Schnittstellenanschluß für die örtlich getrennten Einheiten erfolgt. Um ein vorgegebenes Menue auf einfache und sichere Weise abarbeiten zu können, ist es vorteilhaft, wenn die Eingabetasten aus einer Freigabe-, zwei Verschiebetasten und einer Rückführtaste entsprechend einem vorgegebenen Menue bestehen. Es ist sichergestellt, daß ein versehentliches Berühren einer Taste zu keiner Veränderung der eingestellten Parameter führt und eine übersichtliche, schrittweise Inbetriebnahme des Überwachungsgerätes durchführbar ist. Eingaben vom übergeordneten Prozessor werden auf einfache Weise möglich, wenn die Schnittstelle für die örtlich getrennten Einheiten mit den Eingabetasten in Funktionsverbindung steht. Um auf die einzelne Verdrahtung von Betätigungselementen vor Ort verzichten zu können, ist es von Vorteil, wenn an das Überwachungsgerät über Steckanschluß ein gesonderter Bedienbaustein anschließbar ist. Der Bedienbaustein kann dann an beliebiger Stelle angeordnet werden. Wenn der Betriebsbaustein LED's als Betriebszustandsanzeigen aufweist, ist auch eine grobe Information über den Zustand an diesem Ort möglich. Um die Anpassung der Ausgangsfunktion zur jeweiligen Sollvorgabe auf einfache Weise auch am Bedienbaustein kenntlich zu machen, ist es von Vorteil, wenn der Bedienbaustein Bedientasten aufweist, denen den Ausgangsfunktionen entsprechend auswechselbare Bezeichnungsschilder zugeordnet sind. Um auch außenliegende Sicherheitseinrichtungen, wie Endschalter und dergleichen, mit in die Funktion des Überwachungsgerätes einzubeziehen, ist es von Vorteil, wenn als betriebsbedingte Fehlererfassung ein Freigabeeingang für das Überwachungsgerät vorgesehen ist. Um auf einzelne Daten schnell reagieren zu können, ist es vorteilhaft, wenn Sende- und Empfangsdaten der wechselseitigen Datenübertragung in mehrere Datenblöcke gegliedert sind und wenn die Übertragungsreihenfolge der einzelnen Datenblöcke entsprechend der erforderlichen zeitlichen Priorität erfolgt. Um die Übertragung voll duplex gestalten zu können, ist es vorteilhaft, wenn die Steuerung der Datenübertragung durch den Grundprozessor erfolgt und wenn dazu der Grundprozessor an den weiteren Prozessor einen Byte-Takt und einen Blocktakt abgibt.

Anhand der Zeichnung wird ein prinzipieller Aufbau des erfindungsgemäßen Überwachungsgerätes gezeigt.

Es zeigen:

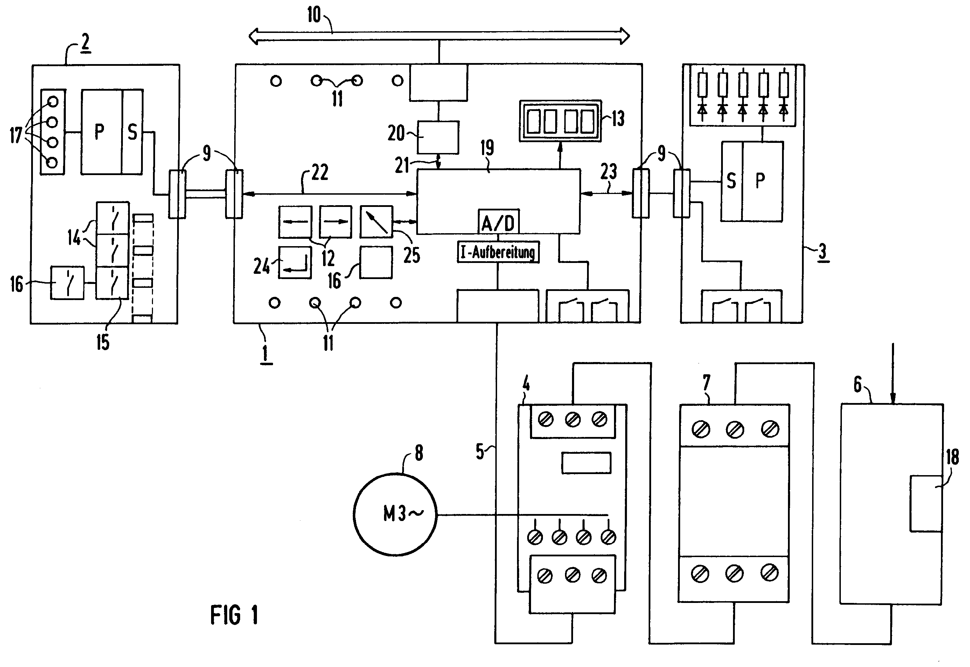

FIG 1     das Grundkonzept,

FIG 2     ein Flußdiagramm für die Ermittlung der Betriebsstunden,

FIG 3     ein Flußdiagramm für die intelligente Kordination Schütz, Stromwandler, Nennstrom und Auslöseklasse mit seitlich angegebenem Beispiel,

FIG 4     einen Funktionsbaum zum Einstellen des Überwachungsgerätes unter Zuhilfenahme der Anzeige,

FIG 5     den Blockaufbau für die Übertragung von Datenblöcken,

FIG 6     das Prinzip der Blocksteuerung

FIG 7     den Ablauf der Blocksteuerung und

FIG 8     Blockorganisation und Sendefolge.

Das in der Zeichnung dargestellte Überwachungsgerät besteht aus dem Grundbaustein 1, dem Bedienbaustein 2, sowie möglicher Erweiterungsbausteine 3. Die Erweiterungsbausteine können nur zusammen mit den Grundbausteinen betrieben werden. Sie beinhalten im wesentlichen die Hardware für die Signalanpassung von der Vor-Ort-Steuerung und der Prozeßparameter sowie die Ausgangsrelais für die Schützansteuerung. Stromwandler 4 dienen zur Erfassung des Stromes über die Stromerfassungsleitung 5, die zum Grundbaustein 1 führt. Sie sind in den Leitungszug von Leistungsschalter 6, Schütz 7 und beispielsweise den Motor 8 eingeschaltet. Sowohl der Erweiterungsbaustein 3 als auch der Bedienbaustein 2 sind über Mehrfachsteckverbindungen 9 und eine Mehrfachleitung miteinander verbunden, so daß Verwechselungen ausgeschlossen sind. Der Kommunikationsbus trägt das Bezugszeichen 10 und ist an Klemmen 11 des Grundbausteines 1 angeschlossen. Der Grundbaustein 1 enthält weiterhin zwei Verschiebetasten 12, eine Freigabetaste 24, eine Rückführtaste 25 zur Eingabe der Parameter und ein Laufdisplay 13, an dem die eingegebenen Werte ablesbar sind. Der Bedienbaustein weist LED's 13 sowie Eintaster 14, Austaster 15 und eine Test- und Resettaste 16 auf.

Dem Grundbaustein 1 sind Einrichtungen zur Ermittlung zusätzlicher, betriebsbedingter Fehler, die vom Betriebsstrom erfaßt werden, beispielsweise Grenzwertüber- oder -unterschreitungen in einer Motorwicklung, Laufzeit- oder Verriegelungszeitüberschreitungen zugeordnet. Es können aber auch Eigenfehler, CPU-Ausfall durch Hardware- oder Softwarefehler sowie der Ausfall des Kommunikationsbusses bzw. der Versorgungsspannung erfaßt werden. Weiterhin können Warnungen über mögliche bevorstehende Fehler, eine Überlastwarnung oder ein Unsymmetriewarnung vorgenommen werden. Die Anzeigen können hier über das Display 13 oder über die LED's 17 im Bedienbaustein vorgenommen werden. Sie können aber auch über den Bus 10 an eine beliebige Stelle, beispielsweise an die Schaltwarte, übergeben werden. Bei allen Fehlermeldungen kann parallel zur spezifischen Anzeige eine Sammelstörungsanzeige vorgesehen sein. Die Fehlermeldungen bleiben auch nach Wegfall der Fehlerursache erhalten. Erst das Betätigen der Resettaste 16 löscht die Fehlermeldung. Zur Ermittlung der Grenzwerte wird über den durch die Stromsensoren erfaßten Strom der Stromeffektivwert berechnet, und zwar unter Berücksichtigung des Übersetzungsverhältnisses der Stromwandler. Die Motorübertemperatur wird dann als Funktion des Effektivstromes über der Zeit ermittelt. Die Motortemperatur kann dann prozentual als relativer Wert vom Verhältnis Ist- zu Sollwert angezeigt werden. Auf ähnliche Weise läßt sich eine Unsymmetrie ermitteln und anzeigen. Zur Erfassung der statistischen Betriebsdaten kann die Zahl der Motorstarts und der Einschaltbereitschaft gezählt werden. Auch ist es möglich, die Zeit der Auslösungen durch Überlast zu zählen und die Summe anzuzeigen oder zu verwerten. Der bei einer Auslösung zuletzt geflossene Strom kann gespeichert und hernach zur Anzeige gebracht werden.

Um das turnusmäßige Warten, d.h. Überprüfen der Schütze auf ausreichendes Schaltstückmaterial, was mit Stillstandzeiten und sonstigen Kosten verbunden ist, zu vermeiden, können Wartungshinweise ermittelt werden. Beim Ausschalten des Schützes fließt beispielsweise der k-fache AC3-Strom des Schützes. Der Faktor K ergibt sich aus

$$K = \frac{\text{fließender Ausschaltstrom}}{\text{AC3} - \text{Strom}.}$$

Den verschiedenen Werten von K wird nach einer im Festwertspeicher (ROM) hinterlegten Sollwerttabelle ein Gewichtungsfaktor zugeordnet. Die Gewichtungsfaktoren werden für alle Schaltspiele aufaddiert und auf einen Maximalwert bezogen. Der Betreiber kann diesen Bezugswert als Wert für die Lebensdauer des Schützes zur Anzeige bringen. Die Motorbetriebsstunden können nach folgendem Schema ermittelt werden:

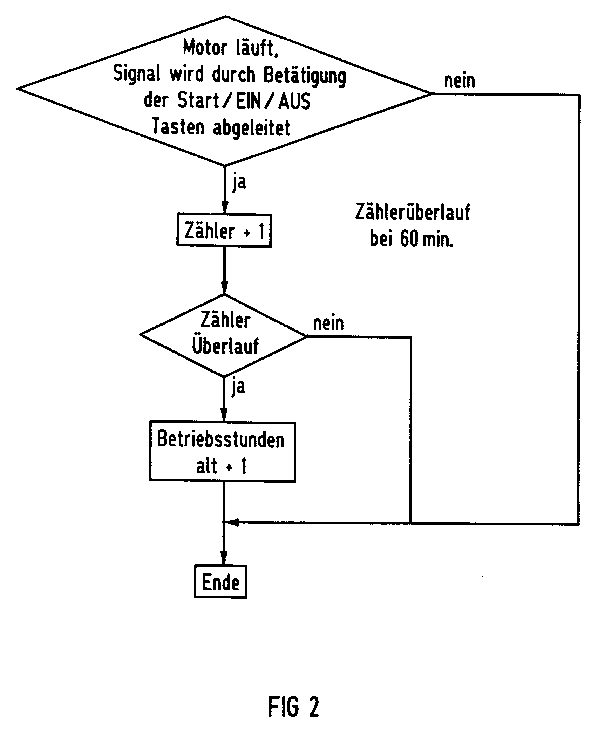

Über ein UND-Gatter wird das Kommando "Motor läuft" und eine Zykluszeit des Mikrocontrollers beispielsweise von 10 Hz eingebracht. In einen Zähler wird die Summe aus "Takt" und "Motor läuft" eingelesen, woraus die Anzeige voller Betriebsstunden ermittelt werden kann, ähnlich dem Flußdiagramm nach FIG 2.

Um eine falsche Zuordnung von Schütz, Stromwandler und Auslöseklasse zu vermeiden, sind im Festwertspeicher des Grundbausteines folgende Daten hinterlegt:

1. Typ und AC3-Strom der Motorschütze, der AC3-Strom ist in DIN 57660, Teil 102 definiert,

2. der Typ und Arbeitsbereich der Stromwandler, d.h. der untere Wandlernennstrom bis zum oberen Wandlernennstrom, indem eine sichere Arbeitsweise der Stromwandler gewährleistet ist,

3. die nachstehende oder eine ähnliche Tabelle, aus der die Strombelastung, das ist der Motornennstrom geteilt durch den AC3-Strom mal 100 in bezug auf die Auslöseklasse, das Verhältnis von Anlaufstrom zu Nennstrom und die maximale relative Auslösezeit zu entnehmen ist. Die relative Auslösezeit ist größer oder gleich dem Quotienten aus dem Produkt der tE-Zeit und dem Verhältnis Anlauf- zu Nennstrom und dem Quotienten 6.

| x = Strombelastung $= \dfrac{\text{I\_N\_Motor}}{\text{AC3\_Strom}} \times 100$ | | | Auslöseklasse | IA/IN | max rel.Auslösezeit s |
|---|---|---|---|---|---|
| | x | 95 | 5, 10 | 2-10 | 10 |
| 95 | x | 90 | 5, 10 | 2-10 | 11 |
| 90 | x | 85 | 5, 10 | 2-10 | 12 |
| 85 | x | 80 | 5, 10 | 2-10 | 13 |
| 80 | x | 75 | 5, 10, 15 | 2-10 | 15 |
| 75 | x | 70 | 5, 10, 15 | 2-10 | 18 |
| 70 | x | 65 | 5, 10   15 20 | 2-10 | 20 |
| 65 | x | 60 | 5, 10, 15, 20 | 2-10 | 24 |
| 60 | x | 55 | 5, 10, 15, 20, 25, 30 | 2-10 | 30 |
| 55 | x | 50 | 5, 10, 15, 20, 25, 30 | 2-10 | 40 |
| 50 | x | 45 | 5, 10, 15, 20, 25, 30 | 2-10 | 60 |
| | x | 45 | 5, 10, 15, 20, 25, 30 | 2-10 | 100 |

$$t_E \text{ - Zeit} \quad \frac{\text{max rel. Ausl. x 6}}{\text{IA/IN}}$$

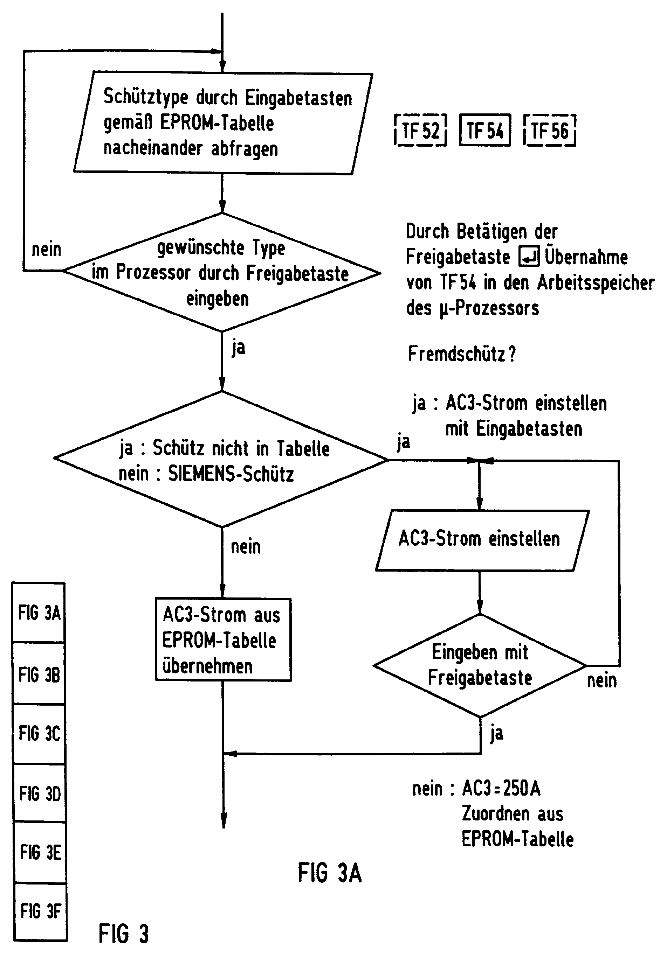

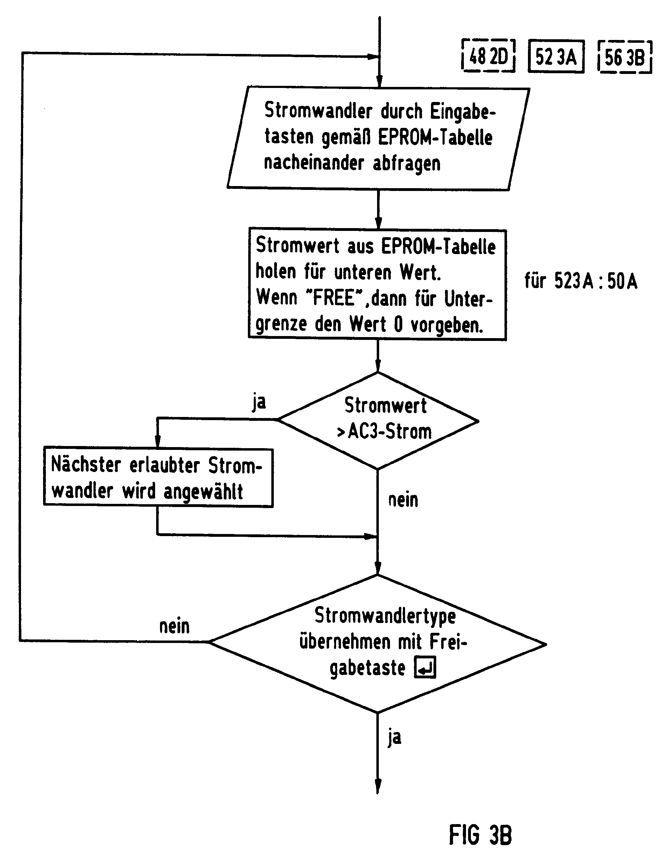

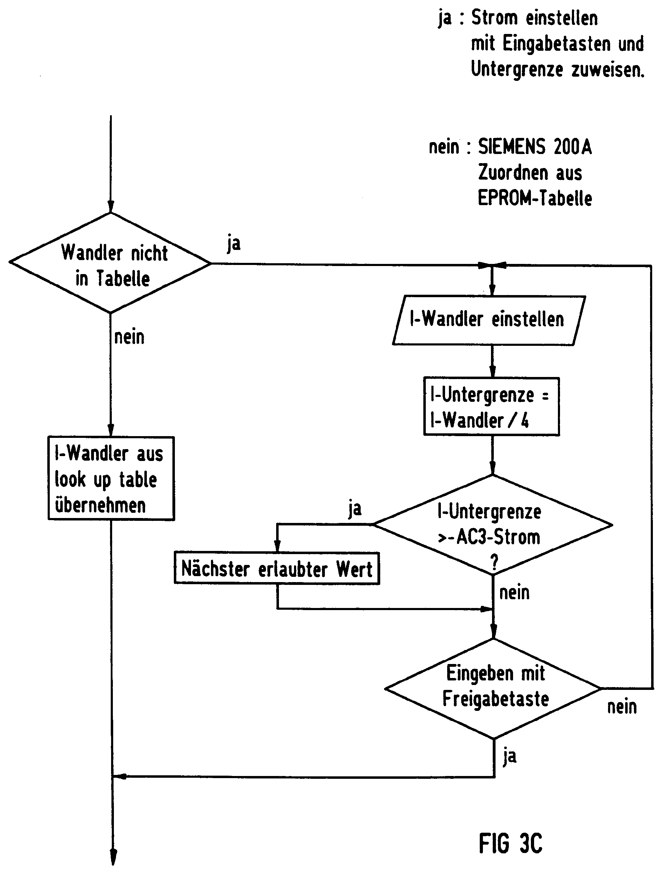

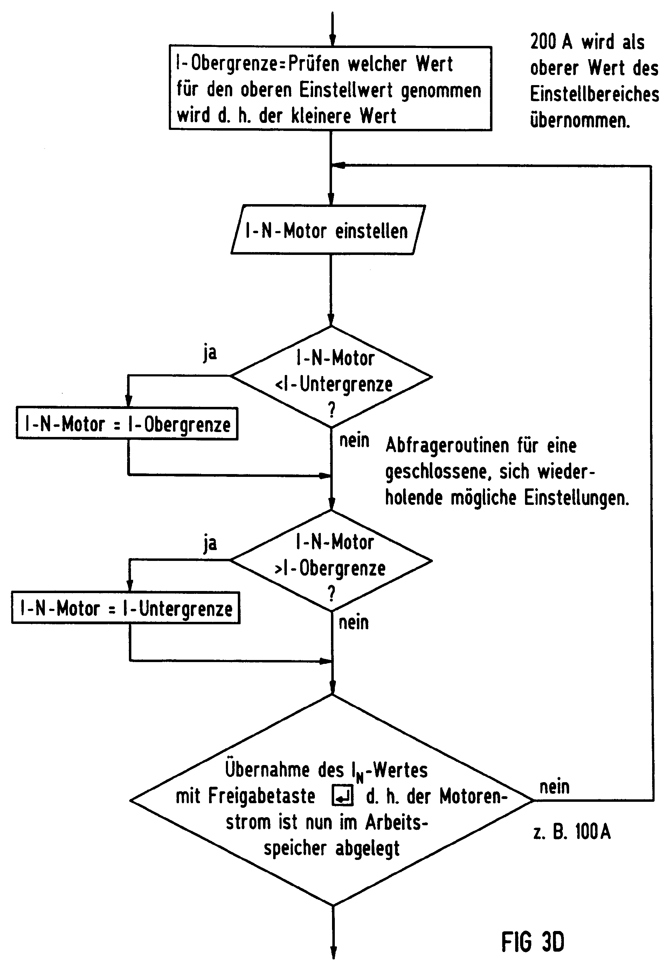

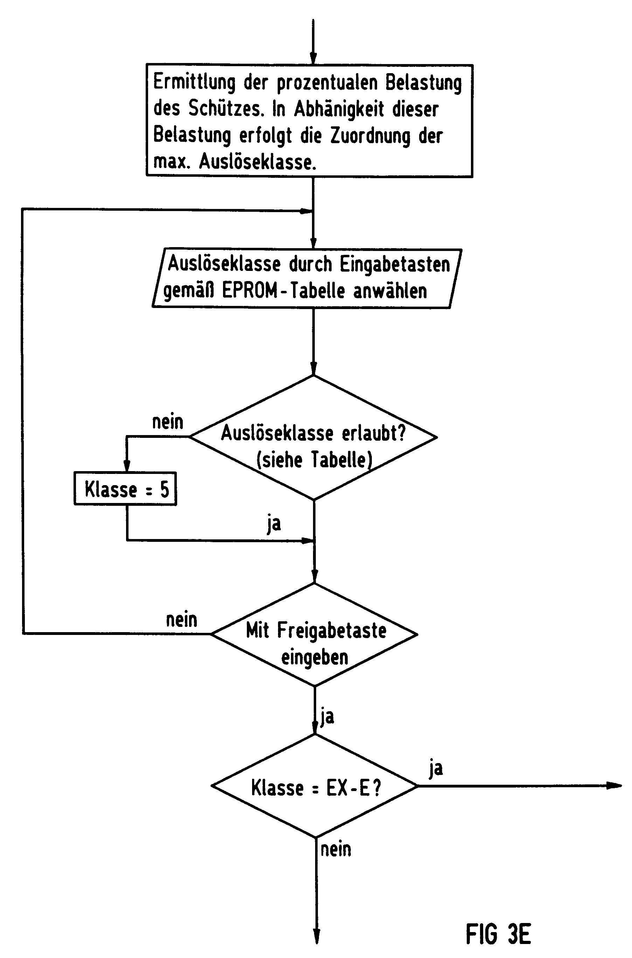

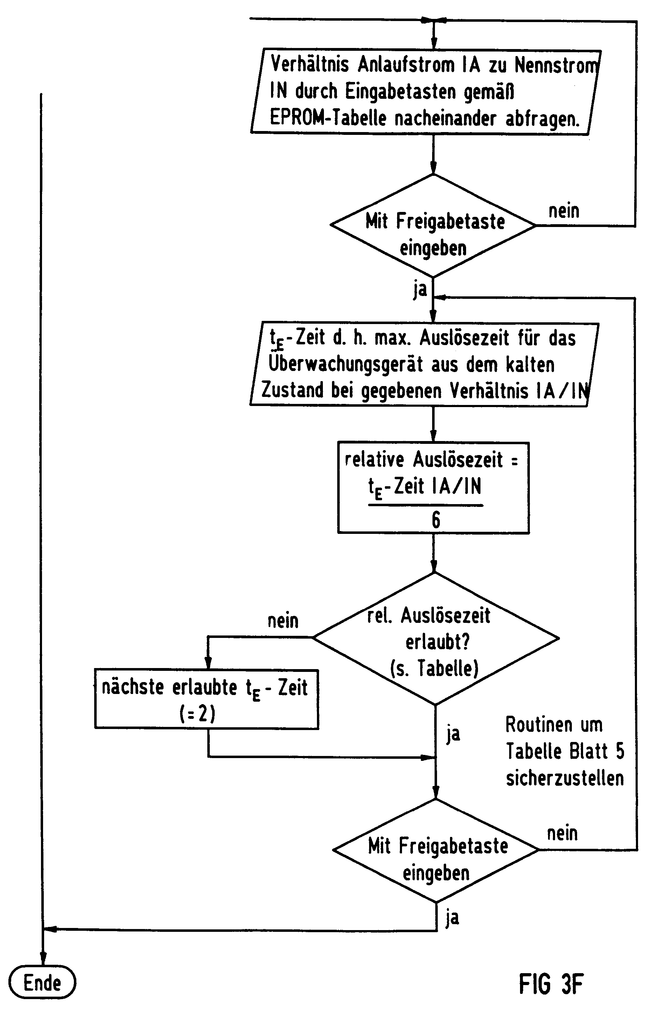

Der Mikrokontroller verknüpft diese Daten mit den Eingaben des Anwenders in der im Flußdiagramm nach FIG 3 angegebenen Weise:

Weiterhin ist in dem Grundbaustein 1 eine Einrichtung zum Sperren des Öffnens des Stromkreises durch das Schütz 7 vorhanden.

Diese Einrichtung wird dann wirksam, wenn durch die Stromerfassung Ströme erfaßt werden, die das Ausschaltvermögen des Schützes bereits überschreiten, beispielsweise in der Größenordnung von Kurzschlußströmen. Um den Strom abzuschalten, wird hier beispielsweise ein getrenntes Ausgangsrelais, das auch ein Arbeitsstromauslöser 18 eines Leistungsschalters 6 sein kann, vorgesehen, um den vorgeschalteten Leistungsschalter 6 auszuschalten und damit den Stromkreis aufzutrennen. Um ein optimiertes Ausschaltverhalten Schütz - Leistungsschalter zu erreichen, wird ein Grenzwert K vom Anwender eingestellt. Der Grenzwert K ist beispielsweise der Quotient aus auszuschaltendem Strom zu Motornennstrom. Wird nun dieser Faktor K zu einem Ausschaltzeitpunkt überschritten, so wird der Ausschaltbefehl nicht an das Schütz, sondern beispielsweise an den Arbeitsstromauslöser 18 des Leistungsschalters 6 gegeben. Auch diese Vergleichsrechnung kann über den Prozessor des Überwachungsgerätes vorgenommen werden.

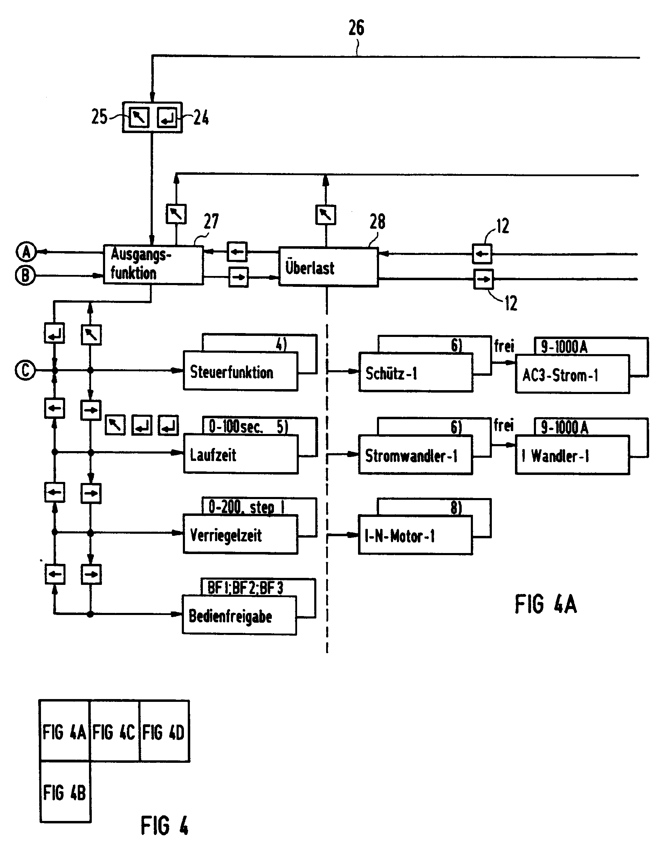

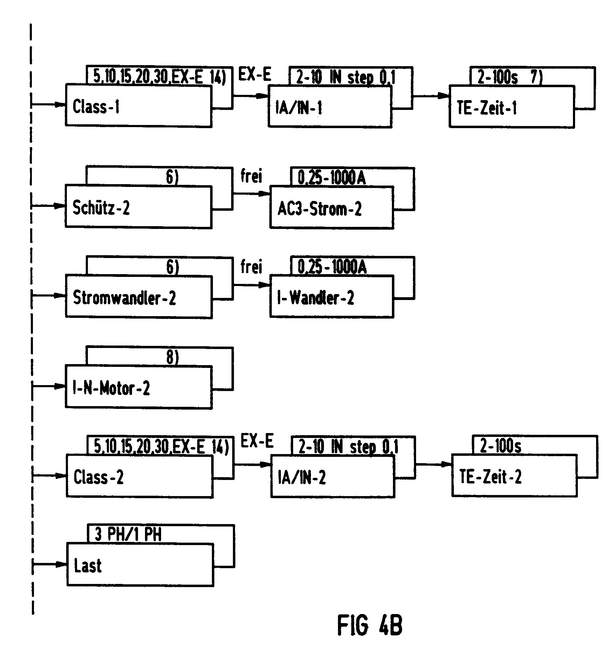

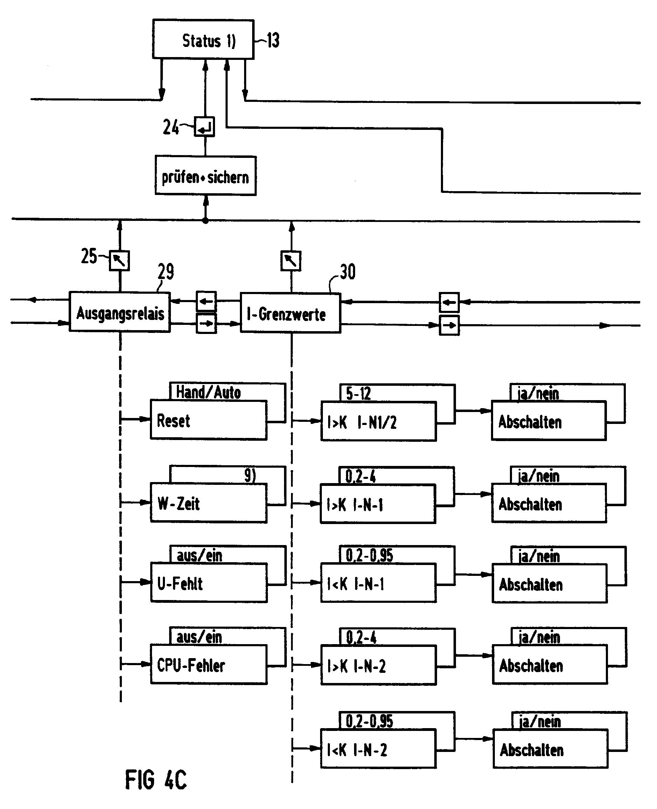

Der in FIG 4 dargestellte Funktionsbaum zeigt ein Beispiel für die Einstellung des Überwachungsgerätes über die Eingabetasten 12, Freigabetasten 24 und Rückführtaste 25. Die in der FIG 4 dargestellten Kästchen stellen einerseits die Funktionsinhalte, und andererseits, zu ersteren versetzt, die Funktionswerte dar. In der Display-Anzeige 13 wird im allgemeinen der Status angezeigt. Darunter ist beispielsweise die Bereitanzeige bzw. die Betriebsanzeige oder die Fehleranzeige zu verstehen. Werden die Tasten 24, 25 in der Leitung 26 gleichzeitig gedrückt, so erreicht man die Funktionsebene, die die Funktionen 27 bis 33 beinhaltet. Die Funktion 27 ist dem Block für die Ausgangsfunktion zugeordnet, 28 entspricht der Überlast, 29 ist das Verhalten des Ausgangsrelais, 30 die Stromgrenzwerte, 31 ist die Funktion der Kommunikation, der Block 32 entspricht der Anzeige und 33 der Diagnose. Werden nun die Tasten 24 und 25 in der Leitung 26 gleichzeitig gedrückt, so werden die Verschiebetasten 12 in der Funktionsebene freigegeben. Hierdurch kann durch Drücken der Verschiebetasten 12 die entsprechende Funktionsgruppe gewählt werden. Wird beispielsweise bei der Funktion Ausgangsfunktion 27 wieder die Freigabetaste 24 gedrückt, so gelangt man zu der Steuerfunktion. Durch erneutes Drücken der Freigabetaste 24 wird die hinterlegte Steuerfunktion abgerufen. Zum Zurückgehen ergeben sich zwei Möglichkeiten, entweder durch Drücken der Freigabe- 24 oder der Rückführtaste 25. Durch Benutzen der Freigabetaste 24 wird die soeben angewählte Steuerfunktion in den Speicher übernommen. Von dem Kästchen Steuerfunktion gelangt man durch mehrfaches Drücken der Vorwärtsverschiebetaste 12 in den Block Laufzeit, Verriegelungszeit oder Bedienfreigabe. Entsprechende Übergänge lassen sich bei den Funktionsblöcken 28 bis 31 erreichen. Die Blöcke 32 und 33 dienen lediglich der Anzeige. So man von der Statusanzeige durch Drücken der Freigabetaste 24 in den Anzeigeblock 32 gelangt, kann mit der Vorwärtsverschiebetaste 12 lediglich in die Diagnose verschoben werden.

Das Vorsehen einer seriell arbeitenden Schnittstelle zur wechselseitigen Datenübertragung zwischen zwei örtlich getrennten Einheiten hat den Vorteil, daß nicht für jedes Signal eine eigene Leitung von dem einen Ort zum anderen gezogen werden muß. Es ergibt sich auch der Vorteil, daß mehrere Prozessoren, die über den Datenbus miteinander verbunden sind, gleichzeitig arbeiten können, so daß die Schnelligkeit der Erfassung und Auslösung wesentlich erhöht wird. Dies läßt sich auch erreichen, wenn der Grundprozessor 19 durch einen weiteren Prozessor 20 ergänzt ist. Der Grundprozessor 19 kann hier über eine interne serielle Schnittstelle 21 mit dem Prozessor 20 verbunden werden. Weiterhin können interne serielle Schnittstellen 22, 23 vorgesehen werden, die mit den Steckverbindern 9 zum Bedienbaustein als auch zu dem Erweiterungsbaustein 3 verbunden sind.

Als Bussystem hat sich beispielsweise das aus der Druckschrift SIMATIC 55 (Industriebussystem SINEC L 1), Ausgabe 1986, bekannte Bussystem bewährt.

Die beiden Prozessoren können Daten untereinander austauschen. Die Art der Datenübertragung kann den unterschiedlichen Prioritäten Rechnung tragen. Die Berücksichtigung unterschiedlicher Prioritätsstufen innerhalb von Übertragungsdaten wird durch unterschiedliche Sendehäufigkeit gelöst. Voraussetzung dafür ist, daß die Daten entsprechend gruppiert gesendet und empfangen werden können. Serielle Datenübertragung zwischen zwei Prozessoren erfolgt üblicherweise nach einem sogenannten "hand-shake"-Verfahren. Dabei teilt der Prozessor, der gerade Daten empfangen hat, über eine Steuerleitung dem Sender mit, daß die gesendeten Daten angekommen sind. Gleiches gilt für die umgekehrte Datenrichtung. Sende- und Empfangsdaten laufen zeitlich unkoordiniert und unregelmäßig. Damit ist der für eine prioritätsabhängige Gruppierung/Staffelung der Daten erforderliche Zeitrahmen nicht möglich. Eine zweite Möglichkeit, einen Rahmen zu bilden, ist die Verwendung von Start- und Stopzeichen. Damit diese Zeichen eindeutig sind, müssen sie als Übertragungsdaten ausgeschlossen werden. Dazu ist eine Codierung der Übertragungsdaten notwendig. Dies führt zu einer Erhöhung der Bruttodaten und zu einem hohen Verarbeitungsaufwand bei beiden Prozessoren.

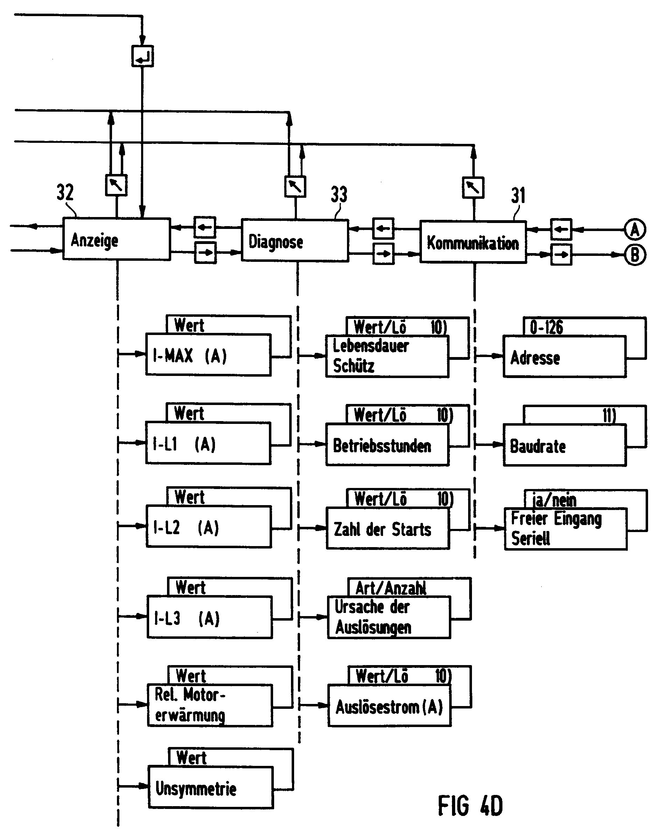

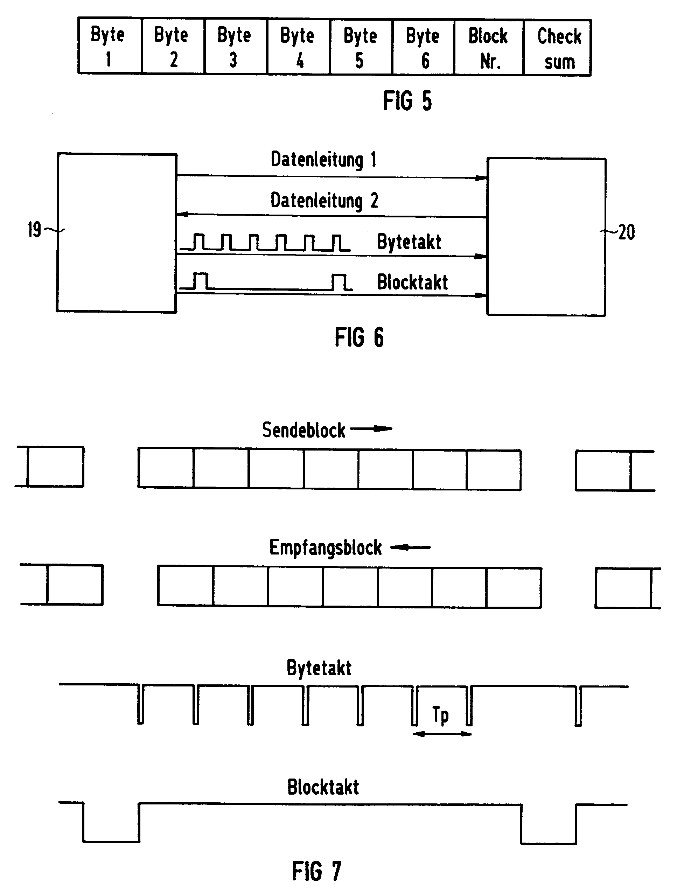

Das erfindungsgemäße Verfahren schafft einen zeitlichen Rahmen für die Übertragung von Datenblöcken. Die Datenblöcke werden durch mehrere Bytes gebildet (FIG 5). Das vorletzte Byte trägt die Blocknummer, das letzte Byte die Check-Sum zur Datensicherung. Sende- und Empfangsblöcke sind gleich lang. Der Grundprozessor 19 bildet beim Senden eines Bytes den Byte-Takt für den weiteren Prozessor 20. Beim Erreichen des Block-Endes erzeugt es den Blockende-Takt für den weiteren Prozessor 20 (FIG 6). Vor und während jeden Blockende-Taktes erfolgt eine Pause im Byte-Takt. Damit wird die Blocksynchronität gewährleistet. In dieser Pause werden die empfangenen Daten geprüft und verarbeitet.

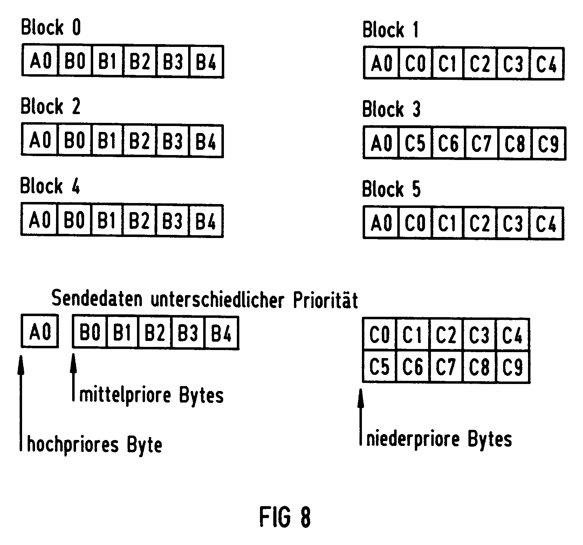

Der Byte-Takt wird so gewählt, daß gewährleistet ist, daß Grundprozessor 19 unter allen denkbaren Betriebsbedingungen während einer Taktperiode Tp (FIG 7) ein Byte senden und empfangen kann. Mit dieser Blockbildung ist die prioritätsorientierte Datenübertragung möglich. FIG 8 zeigt diese Übertragung beispielhaft. Für Sende- und Empfangsrichtung ist nur die Blocklänge gemeinsam, Blockorganisation und Blockreihenfolge sind beliebig wählbar. Die Übertragung ist voll-duplex (FIG 6). Die Datenübertragungsgeschwindigkeit orientiert sich am maximal möglichen Byte-Takt.

Der benötigte Datenpuffer für den Datenempfang entspricht einem Datenblock. Die Blockgröße wird so gewählt, daß bei minimalem Datenspeicher (Pufferspeicher) die Prioritätsanforderungen erfüllt sind.

Durch das erfindeungsgemäße Überwachungsgerät ist ein intelligentes Feldgerät geschaffen worden, das einen optimal anpaßbaren, parametrierbaren Motorschutz, Motorstromanzeige und Diagnosefunktion aufweist. Zur Umsetzung dieser Funktionen wird eine Vielzahl von Daten vom Rechner zur Verfügung gestellt. Zur Mitbenutzung von bereits bestehenden Bedien- und Beobachtungseinrichtungen dient die normierte Kommunikationsschnittstelle, die eine Senkung des Verdrahtungs- und Energieaufwandes mit sich bringt und eine komfortable, flexible Inbetriebnahme und Wartung des Abzweiges ermöglicht. Das erfindungsgemäße Überwachungsgerät kann auch mit übergeordneten Automatisierungseinrichtungen zusammenarbeiten.

**Patentansprüche**

1. Überwachungsgerät mit einer abhängig von einer Stromerfassungseinrichtung (5) wirkenden Schaltvorrichtung (7) zum Öffnen bzw. Schließen von Stromkreisen bei Überlast, mit einem Prozessor und Sollwertspeichern, mit denen Istwerte vergleichbar und auswertbar sind, sowie Auslösezustandsanzeigemitteln, **dadurch gekennzeichnet**, daß das Überwachungsgerät eine Einrichtung (19) zum Sperren der Einschaltung der Schaltvorrichtung (7) bei nicht zulässiger Zuordnung von Stromwandlerbelastbarkeit, Schützgröße, Nennstrom und Auslöseklasse und eine weitere Einrichtung (20) zur Zuordnung unterschiedlicher Ausgangsfunktionen zur jeweiligen Sollvorgabe umfaßt und in das Überwachungsgerät ein Laufdisplay (13) zur Anzeige entsprechender Meldungen, statistischer Betriebsdaten sowie Wartungshinweisen integriert ist.

2. Überwachungsgerät nach Anspruch 1, **dadurch gekennzeichnet**, daß im Überwachungsgerät Eingabetasten (12,24,25) zur Eingabe gewünschter im Laufdisplay (13) anzeigbarer Parameter vorhanden sind.

3. Überwachungsgerät nach Anspruch 1 oder 2, **dadurch gekennzeichnet**, daß die Sperreinrichtung (19) zusätzlich von Vorgaben für den Explosionsschutz abhängig ist.

4. Überwachungsgerät nach Anspruch 1, 2 oder 3, **dadurch gekennzeichnet**, daß in das Überwachungsgerät eine Einrichtung (19) zum Sperren und Öffnen des Stromkreises durch ein Schütz (7) und zur Freigabe des Schaltvorganges durch den übergeordneten Leistungsschalter (6) integriert ist.

5. Überwachungsgerät nach Anspruch 1, **dadurch gekennzeichnet**, daß die Ausgangsfunktionen in Direktstarten, Wendestarten, Stern-Dreieckstarten, Dahlanderstarten, Polumschalten, Ventilbetätigen, Schieberbetätigen, Sanftstarten und Betätigungen verklinkter Schaltgeräte bestehen.

6. Überwachungsgerät nach einem der vorhergehenden Ansprüche, **dadurch gekennzeichnet**, daß in das Überwachungsgerät eine oder mehrere seriell arbeitende Schnittstellen (10,21,22,23) zur wechselseitigen Datenübertragung zwischen zwei getrennten Einheiten integriert sind.

7. Überwachungsgerät nach Anspruch 6, **dadurch gekennzeichnet**, daß die Einheiten örtlich getrennte Prozessoren (19,20) sind.

8. Überwachungsgerät nach einem der vorhergehenden Ansprüche, **dadurch gekennzeichnet**, daß die Freigabe der Eingabetastenfunktion (12) abhängig vom Schnittstellenanschluß (21,10) für die örtlich getrennten Einheiten erfolgt.

9. Überwachungsgerät nach Anspruch 2 und einem der vorhergehenden Ansprüche, **dadurch gekennzeichnet**, daß die Eingabetasten aus einer Freigabetaste (24), zwei Verschiebetasten (12) und einer Rückführtaste (25) entsprechend einem vorgegebenen Menü bestehen.

10. Überwachungsgerät nach Anspruch 2 und 6, **dadurch gekennzeichnet**, daß die Schnittstelle (21,10) für die örtlich getrennte Einheit mit den Eingabetasten (12) in Funktionsverbindung steht.

11. Überwachungsgerät nach einem der vorhergehenden Ansprüche, **dadurch gekennzeichnet**, daß an das Überwachungsgerät über Steckanschluß (9) ein gesonderter Bedienbaustein (2) anschließbar ist.

12. Überwachungsgerät nach Anspruch 11, **dadurch gekennzeichnet**, daß der Bedienbaustein (2) Lumineszenzdioden (17) als Betriebszustandsanzeigen aufweist.

13. Überwachungsgerät nach Anspruch 11, **dadurch gekennzeichnet**, daß der Bedienbaustein Bedientasten (14,15,16) aufweist, denen den Ausgangsfunktionen entsprechend auswechselbare Bezeichnungsschilder zugeordnet sind.

14. Überwachungsgerät nach einem der vorhergehenden Ansprüche, **dadurch gekennzeichnet**, daß als betriebsbedingte Fehlerfassung ein Freigabeeingang für das Überwachungsgerät vorgesehen ist.

15. Überwachungsgerät nach Anspruch 6 oder 7, **dadurch gekennzeichnet**, daß Sende- und Empfangsdaten der wechselseitigen Datenübertragung (19,20) in mehrere Datenblöcke gegliedert sind und daß die Übertragungsreihenfolge der einzelnen Datenblöcke entsprechend der erforderlichen zeitlichen Priorität erfolgt.

16. Überwachungsgerät nach Anspruch 7 oder 15, **dadurch gekennzeichnet**, daß die Steuerung der Datenübertragung durch den Grundprozessor (19) erfolgt und daß dazu der Grundprozessor (19) an den weiteren Prozessor (20) einen Byte-Takt und einen Blocktakt abgibt.

## Claims

1. Monitoring device having a switching mechanism (7) to open or close electric circuits in case of overload wherein the switching mechanism operates as a function of a current-detecting device (5), which monitoring device also includes a processor and setpoint memories for comparing and evaluating actual values and tripping state indicating devices characterized in that the monitoring device comprises a device (19) for blocking enabling of the switching mechanism (7) in the event of an impermissible assignment of maximum load capacity of the current transformer, contactor size, rated current and tripping class and a further device (20) for the assignment of different output operations to the relevant setpoint selection and in which a run display for the display of appropriate messages, statistical operating data and maintenance instructions is integrated in the monitoring device.

2. Monitoring device in accordance with Claim 1, characterized in that the monitoring device incorporates input keys (12, 24, 25) for the input of desired parameters which can be displayed in the run display (13).

3. Monitoring device in accordance with Claim 1 or 2, characterized in that the blocking device (19) is additionally dependent on pre-set values for explosion protection.

4. Monitoring device in accordance with Claim 1, 2 or 3, characterized in that a device (19) is integrated in the monitoring device for blocking and releasing the power circuit by means of a contactor (7) and to release the switching process by means of the superordinate circuit breaker (6).

5. Monitoring device in accordance with Claim 1, characterized in that the output operations consist of instant start-ups, reverse start-ups, star-delta start-ups, Dahlander start-ups, pole reversals, valve actuations, gate-valve operations, soft start-ups and the actuation of latched switching devices.

6. Monitoring device in accordance with one of the preceding claims, characterized in that one or more serially operating interfaces (10, 21, 22, 23) are integrated in the monitoring device for two-way data transmission between two separated units.

7. Monitoring device in accordance with Claim 6, characterized in that the units are locally separated processors (19, 20).

8. Monitoring device in accordance with one of the preceding claims, characterized in that enabling of the input key operations (12) is dependent on the interface connection (21, 10) for the locally separated units.

9. Monitoring device in accordance with Claim 2 and one of the preceding claims, characterized in that the input keys comprise an enable key (24), two shift keys (12) and a feedback key (25) in accordance with a specified menu.

10. Monitoring device in accordance with Claims 2 and 6, characterized in that the interface (21, 10) for the locally separated unit is operationally coupled with the input keys (12).

11. Monitoring device in accordance with one of the preceding claims, characterized in that a separate operator control unit (2) can be connected to the monitoring device by way of a plug-in connector (9).

12. Monitoring device in accordance with Claim 11, characterized in that the operator control unit (2) has light-emitting diodes (17) as the operational status indicators.

13. Monitoring device in accordance with Claim 11, characterized in that the operator control unit has operating keys (14, 15, 16) to which the output functions are assigned in accordance with interchangeable labels.

14. Monitoring device in accordance with one of the preceding claims, characterized in that an enable input is provided for the monitoring device for the detection of operating errors.

15. Monitoring device in accordance with Claim 6 or 7, characterized in that transmitted and received data in two-way data transmission (19, 20) are divided into a number of data blocks and in that the transmission sequence of the individual data blocks is determined in accordance with the time priority required.

16. Monitoring device in accordance with Claim 7 or 15, characterized in that data transmission is controlled by the base processor (19) and in that the base processor (19) transmits a byte clock pulse and a block pulse to the additional processor (20) for this purpose.

**Revendications**

1. Appareil de contrôle comportant un dispositif de commutation (7) agissant, en fonction d'un dispositif de détection de courant (5), pour ouvrir ou fermer des circuits en cas de surcharge, comportant un processeur et des mémoires de valeurs de consigne, auquel peuvent être comparées des valeurs réelles qui peuvent être évaluées, ainsi que des moyens d'affichage d'un état de déclenchement, caractérisé par le fait que l'appareil de contrôle comporte un dispositif (19) pour bloquer la fermeture du dispositif de commutation (7) dans le cas d'une association inadmissible d'une capacité de charge d'un transformateur de courant, d'une valeur de contacteur, d'un courant nominal et d'une classe de déclenchement, et un autre dispositif (20) pour associer différentes fonctions de sortie à la prédétermination de consigne respective, et qu'un dispositif d'affichage de fonctionnement (13) servant à afficher des signalisations correspondantes, des données de fonctionnement statistiques ainsi que des indications de maintenance, est intégré dans l'appareil de contrôle.

2. Appareil de contrôle suivant la revendication 1, caractérisé par le fait que dans l'appareil de contrôle sont présentes des touches d'entrée (12, 24, 25) servant à introduire des paramètres désirés pouvant être affichés dans le dispositif d'affichage de fonctionnement (13).

3. Appareil de contrôle suivant la revendication 1 ou 2, caractérisé par le fait que le dispositif de blocage (19) dépend en outre de prédéterminations pour la protection contre un risque d'explosion.

4. Appareil de contrôle suivant la revendication 1, 2 ou 3, caractérisé par le fait que dans l'appareil de contrôle est intégré un dispositif (19) servant à bloquer ou ouvrir le circuit au moyen d'un contacteur (7) et à libérer l'opération de coupure au moyen du disjoncteur (6) de rang supérieur.

5. Appareil de contrôle suivant la revendication 1, caractérisé par le fait que les fonctions de sortie consistent en des démarrages directs, des démarrages à inversion, des démarrages en étoile-triangle, des démarrages de Dahlander, des inversions de polarité, des actionnements de soupapes, des actionnements de poussoirs, des démarrages en douceur et des actionnements d'appareils de coupure encliquetés.

6. Appareil de contrôle suivant l'une des revendications précédentes, caractérisé par le fait que dans l'appareil de contrôle sont intégrés une ou plusieurs interfaces (10,21,22,23) qui opèrent en série et servent à réaliser la transmission alternée de données entre deux unités séparées.

7. Appareil de contrôle suivant la revendication 6, caractérisé par le fait que les unités sont des processeurs (19,20) séparés localement.

8. Appareil de contrôle suivant l'une des revendications précédentes, caractérisé par le fait que l'autorisation de fonctionnement (12) de la touche d'entrée s'effectue en fonction de la borne d'interface (21,10) pour les unités séparées localement.

9. Appareil de contrôle suivant la revendication 2 et l'une des revendications précédentes, caractérisé par le fait que les touches d'entrée sont constituées par une touche d'autorisation (24), deux touches de transfert (12) et une touche de retour (25), conformément à un menu prédéterminé.

10. Appareil de contrôle suivant la revendication 2 et 6, caractérisé par le fait que l'interface (21,10) pour l'unité séparée localement est reliée fonctionnellement aux touches d'entrée (12).

11. Appareil de contrôle suivant l'une des revendications précédentes, caractérisé par le fait qu'un module particulier de commande (2) peut être raccordé à l'appareil de contrôle au moyen de la borne à enfichage (9).

12. Appareil de contrôle suivant la revendication 11, caractérisé par le fait que le module de commande (2) possède des diodes à luminescence (17) en tant qu'éléments d'affichage de l'état de fonctionnement.

13. Appareil de contrôle suivant la revendication 11, caractérisé par le fait que le module de commande comporte des touches de commande (14,15,16), auxquelles des plaques signalétiques interchangeables sont associées sur la base des fonctions de sortie.

14. Appareil de contrôle suivant l'une des revendications précédentes, caractérisé par le fait qu'il est prévu, comme système de détection d'erreurs conditionnées par le fonctionnement, une entrée d'autorisation pour l'appareil de contrôle.

15. Appareil de contrôle suivant la revendication 6 ou 7, caractérisé par le fait que des données d'émission et de réception du système de transmission alternée de données (19, 20) sont subdivisées en plusieurs blocs de données et que la succession de transmission des différents blocs de données s'effectue en fonction de la priorité requise dans le temps.

16. Appareil de contrôle suivant la revendication 7 ou 15, caractérisé par le fait que la commande de la transmission de données est réalisée au moyen du processeur de base (19) et qu'à cet effet le processeur de base (19) délivre, à l'autre processeur (20), une cadence d'octets et une cadence de blocs.

FIG 1

Motor läuft,
Signal wird durch Betätigung
der Start / EIN / AUS
Tasten abgeleitet

nein

ja

Zähler + 1

Zählerüberlauf
bei 60 min.

Zähler
Überlauf

nein

ja

Betriebsstunden
alt + 1

Ende

FIG 2

11

Schütztype durch Eingabetasten gemäß EPROM-Tabelle nacheinander abfragen

⌈TF52⌉ ⌈TF54⌉ ⌈TF56⌉

gewünschte Type im Prozessor durch Freigabetaste eingeben

nein

ja

Durch Betätigen der Freigabetaste ⌑ Übernahme von TF54 in den Arbeitsspeicher des µ-Prozessors

Fremdschütz?

ja : AC3-Strom einstellen mit Eingabetasten

ja : Schütz nicht in Tabelle
nein : SIEMENS-Schütz

ja

nein

AC3-Strom aus EPROM-Tabelle übernehmen

AC3-Strom einstellen

Eingeben mit Freigabetaste

nein

ja

nein : AC3 = 250A
Zuordnen aus
EPROM-Tabelle

FIG 3A

FIG 3A
FIG 3B
FIG 3C
FIG 3D
FIG 3E
FIG 3F

FIG 3

48 2D  52 3A  56 3B

Stromwandler durch Eingabetasten gemäß EPROM-Tabelle
nacheinander abfragen

Stromwert aus EPROM-Tabelle
holen für unteren Wert.
Wenn "FREE",dann für Untergrenze den Wert 0 vorgeben.

für 523A : 50A

Stromwert
>AC3-Strom

ja

Nächster erlaubter Stromwandler wird angewählt

nein

Stromwandlertype
übernehmen mit Freigabetaste ⏎

nein

ja

FIG 3B

ja : Strom einstellen
mit Eingabetasten und
Untergrenze zuweisen.

nein : SIEMENS 200 A
Zuordnen aus
EPROM-Tabelle

```
                    ja
    ┌──────────────┐────────────────────────────────────┐
    │ Wandler nicht│                                     │
    │  in Tabelle  │                                     │
    └──────────────┘                                     │
          │ nein              ┌─────────────────────┐    │
          │                   │ I-Wandler einstellen│    │
          │                   └─────────────────────┘    │
          │                            │                 │
    ┌──────────────┐          ┌─────────────────┐        │
    │ I-Wandler aus│          │ I-Untergrenze =  │       │
    │ look up table│          │ I-Wandler / 4    │       │
    │  übernehmen  │          └─────────────────┘        │
    └──────────────┘                   │                 │
          │                ja ┌─────────────────┐        │
          │         ┌─────────│ I-Untergrenze    │       │
          │         │         │ >-AC3-Strom      │       │
          │  ┌──────────────┐ │       ?          │       │
          │  │Nächster      │ └─────────────────┘        │
          │  │erlaubter Wert│        │ nein             │
          │  └──────────────┘         │                 │
          │         └─────────────────┤                 │
          │                    ┌─────────────────┐       │
          │                    │ Eingeben mit     │ nein │
          │                    │ Freigabetaste    │──────┘
          │                    └─────────────────┘
          │                            │ ja
          │◄───────────────────────────┘
          ▼
```

FIG 3C

I-Obergrenze=Prüfen welcher Wert
für den oberen Einstellwert genommen
wird d. h. der kleinere Wert

200 A wird als
oberer Wert des
Einstellbereiches
übernommen.

I-N-Motor einstellen

ja

I-N-Motor
<I-Untergrenze
?

I-N-Motor = I-Obergrenze

nein Abfrageroutinen für eine
geschlossene, sich wiederholende mögliche Einstellungen.

ja

I-N-Motor
>I-Obergrenze
?

I-N-Motor = I-Untergrenze

nein

Übernahme des $I_N$-Wertes
mit Freigabetaste ⏎ d. h. der Motorenstrom ist nun im Arbeitsspeicher abgelegt

nein

z. B. 100A

FIG 3D

15

FIG 3E

Verhältnis Anlaufstrom IA zu Nennstrom
IN durch Eingabetasten gemäß
EPROM-Tabelle nacheinander abfragen.

Mit Freigabetaste
eingeben

nein

ja

$t_E$-Zeit d. h. max. Auslösezeit für das
Überwachungsgerät aus dem kalten
Zustand bei gegebenen Verhältnis IA/IN

relative Auslösezeit =

$$\frac{t_E\text{-Zeit IA/IN}}{6}$$

rel. Auslösezeit
erlaubt?
(s. Tabelle)

nein

nächste erlaubte $t_E$ - Zeit
(= 2)

ja

Routinen um
Tabelle Blatt 5
sicherzustellen

Mit Freigabetaste
eingeben

nein

ja

Ende

FIG 3F

FIG 4A

| FIG 4A | FIG 4C | FIG 4D |
|---|---|---|
| FIG 4B | | |

FIG 4

FIG 4B

Status 1) — 13

24 — ↵

prüfen•sichern

25 — ◥

29

Ausgangsrelais ← ← ← I-Grenzwerte 30
→

| Hand/Auto | | 5-12 | | ja/nein |
|---|---|---|---|---|
| Reset | → | I>K  I-N1/2 | → | Abschalten |

| | 9) | 0,2-4 | | ja/nein |
|---|---|---|---|---|
| W-Zeit | → | I>K  I-N-1 | → | Abschalten |

| aus/ein | | 0,2-0,95 | | ja/nein |
|---|---|---|---|---|
| U-Fehlt | → | I<K  I-N-1 | → | Abschalten |

| aus/ein | | 0,2-4 | | ja/nein |
|---|---|---|---|---|
| CPU-Fehler | → | I>K  I-N-2 | → | Abschalten |

| | | 0,2-0,95 | | ja/nein |
|---|---|---|---|---|
| | | I<K  I-N-2 | → | Abschalten |

FIG 4C

| 32 | 33 | 31 |
|---|---|---|
| **Anzeige** | **Diagnose** | **Kommunikation** |

| **Wert** | **Wert/Lö** 10) | **0-126** |
|---|---|---|
| I-MAX (A) | Lebensdauer Schütz | Adresse |

| **Wert** | **Wert/Lö** 10) | 11) |
|---|---|---|
| I-L1 (A) | Betriebsstunden | Baudrate |

| **Wert** | **Wert/Lö** 10) | **ja/nein** |
|---|---|---|
| I-L2 (A) | Zahl der Starts | Freier Eingang Seriell |

| **Wert** | **Art/Anzahl** |
|---|---|
| I-L3 (A) | Ursache der Auslösungen |

| **Wert** | **Wert/Lö** 10) |
|---|---|
| Rel. Motor-erwärmung | Auslösestrom (A) |

| **Wert** |
|---|
| Unsymmetrie |

**FIG 4D**

21

| Byte 1 | Byte 2 | Byte 3 | Byte 4 | Byte 5 | Byte 6 | Block Nr. | Check sum |
|--------|--------|--------|--------|--------|--------|-----------|-----------|

FIG 5

Datenleitung 1

Datenleitung 2

Bytetakt

Blocktakt

19

20

FIG 6

Sendeblock →

Empfangsblock ←

Bytetakt

Tp

Blocktakt

FIG 7

Block 0

| A0 | B0 | B1 | B2 | B3 | B4 |

Block 1

| A0 | C0 | C1 | C2 | C3 | C4 |

Block 2

| A0 | B0 | B1 | B2 | B3 | B4 |

Block 3

| A0 | C5 | C6 | C7 | C8 | C9 |

Block 4

| A0 | B0 | B1 | B2 | B3 | B4 |

Block 5

| A0 | C0 | C1 | C2 | C3 | C4 |

Sendedaten unterschiedlicher Priorität

| A0 |

| B0 | B1 | B2 | B3 | B4 |

mittelpriore Bytes

hochpriores Byte

| C0 | C1 | C2 | C3 | C4 |
| C5 | C6 | C7 | C8 | C9 |

niederpriore Bytes

FIG 8